# EUROPÄISCHE PATENTANMELDUNG

(11) **EP 3 851 668 A1**
(43) Veröffentlichungstag der Anmeldung: **21.07.2021**
(21) Anmeldenummer: 21151783.4
(22) Anmeldetag: 15.01.2021
(51) Int. Cl.: F03D 1/06, F03D 80/70

(54) **WINDENERGIEANLAGE, WINDENERGIEANLAGEN- ROTORBLATT UND BLATTLAGERUNG FÜR EINE WINDENERGIEANLAGE**

(30) Priorität: 17.01.2020 DE 102020101089
(71) Anmelder: Wobben Properties GmbH, 26607 Aurich (DE)
(72) Erfinder: Börchers, Rasmus, 28211 Bremen (DE); Bürkner, Falko, 28757 Bremen (DE); Schüller, Jörg, 28213 Bremen (DE)
(74) Vertreter: Eisenführ Speiser

(57) **Zusammenfassung**

Die Erfindung betrifft eine Windenergieanlage, umfassend: eine Nabe (114) mit einem hohlzylindrischen Bereich (120) mit einem mittlerer Umfang U_{N}; mindestens ein drehbar an der Nabe (114) gelagertes Rotorblatt (108) mit einem Blattlaminat (116), welches sich in Längsrichtung des Rotorblatts (108) erstreckt und zumindest abschnittsweise einen Hohlzylinder mit einem mittleren Umfang U_{R} ausbildet; und mindestens eine Blattlagerung (10, 10') zum Lagern des Rotorblatts (108) an der Nabe (114) mit einem nabenseitig angeordneten ersten Lagerring (16, 16'), welcher mittels einer ersten Flanschverbindung (12, 12') mit einem Rotornabenflansch (115), welcher an einem rotorblattseitigen Endabschnitt der Nabe (114) ausgebildet ist, verbunden ist, dadurch gekennzeichnet, dass die erste Flanschverbindung (12, 12') mindestens einen Naben-Längsbolzen (18) aufweist, der auf einem Umfang U_{NB} koaxial zur Blattlagerung (10, 10') angeordnet ist; und einem rotorblattseitig angeordneten zweiten Lagerring (20, 20'), welcher mittels einer zweiten Flanschverbindung (14, 14') mit einem Rotorblattflansch (112), welcher an einem nabenseitigen Endabschnitt des Rotorblattes (108) ausgebildet ist, verbunden ist, wobei die zweite Flanschverbindung (14, 14') mindestens einen Rotorblatt-Längsbolzen (24) aufweist, welcher auf einem Umfang U_{RB} koaxial zur Blattlagerung (10, 10') angeordnet ist. Die Erfindung löst die zugrundeliegende Aufgabe dadurch, dass zwischen dem Umfang U_{N} und dem Umfang U_{NB} ein erster radialer Versatz V₁ und/oder zwischen dem Umfang U_{RB} und dem Umfang U_{R} ein zweiter radialer Versatz V₂ ausgebildet ist. Die Erfindung löst die zugrundeliegende Aufgabe in weiteren Aspekten durch ein Windenergieanlagen-Rotorblatt (108) und eine Rotorblattlagerung (10, 10').

## Beschreibung

Die vorliegende Erfindung betrifft eine Windenergieanlage, umfassend: eine Nabe mit einem hohlzylindrischen Bereich mit einem mittlerer Umfang U_{N}, mindestens ein drehbar an der Nabe gelagertes Rotorblatt mit einem Blattlaminat, welches sich in Längsrichtung des Rotorblatts erstreckt und zumindest abschnittsweise einen Hohlzylinder mit einem mittleren Umfang U_{R} ausbildet, und mindestens eine Blattlagerung zum Lagern des Rotorblatts an der Nabe mit einem nabenseitig angeordneten ersten Lagerring, welcher mittels einer ersten Flanschverbindung mit einem Rotornabenflansch, welcher an einem rotorblattseitigen Endabschnitt der Nabe ausgebildet ist, verbunden ist, wobei die erste Flanschverbindung mindestens einen Naben-Längsbolzen aufweist, welcher auf einem Umfang U_{NB} koaxial zur Blattlagerung angeordnet ist, einem rotorblattseitig angeordneten zweiten Lagerring, welcher mittels einer zweiten Flanschverbindung mit einem Rotorblattflansch, welcher an einem nabenseitigen Endabschnitt des Rotorblattes ausgebildet ist, verbunden ist, wobei die zweite Flanschverbindung mindestens einen Rotorblatt-Längsbolzen aufweist, welcher auf einem Umfang U_{RB} koaxial zur Blattlagerung angeordnet ist.

Windenergieanlagen sind allgemein bekannt. Sie weisen mindestens ein Rotorblatt auf, welches drehbar mittels einer Blattlagerung an der Nabe gelagert ist. Der Anstellwinkel des Rotorblatts zum Wind relativ zur Nabe wird dabei zumeist mit einem Pitchantrieb festgestellt. Die maßgebenden Belastungen eines Blattlagers sind Biegemomente, welche durch Eigengewichtsbelastung und Windlast hervorgerufen werden. Die Biegemomente werden z.B. in Schlagrichtung über die Blattgurte im Bereich des Blattlaminats als Längskräften aufgenommen.

Bei Blattlagerungen, insbesondere bei Wälzlagerungen, dieser Art, kann dabei ein radialer Versatz in der äußeren Längskraft entstehen. Der Versatz erzeugt ein Moment das sowohl das Lager als auch die angrenzenden Bauteile "verkrempelt" und zu einer erhöhten Belastung führt. Bei großen Lager- sowie Rotorblattdurchmessern sind die lokalen durch die Längskräfte bedingten Momente zu vernachlässigen. Wenn aber der Rotorblattdurchmesser beispielsweise aus Transportgründen oder zur Materialersparnis sehr klein für die jeweilige Blattlänge gewählt wird, erhöhen sich die Längskräfte und damit die lokalen Momente aus den Versätzen derart, dass die Flanschverbindungen und insbesondere die Bolzen der Flanschverbindungen, überlastet werden können.

Es ist daher Aufgabe der vorliegenden Erfindung, bei Windenergieanlagen der eingangs beschriebenen Art, die im Stand der Technik vorgefundenen Nachteile möglichst weitgehend zu überwinden. Der Erfindung lag insbesondere die Aufgabe zugrunde, die Tragfähigkeit von Blattlagerungen von Windenergieanlagen der eingangs genannten Art derart zu erhöhen, dass kleinere Flanschdurchmesser bei gleichem Lastniveau einsetzbar sind. Jedenfalls lag der Erfindung die Aufgabe zugrunde, eine alternative Windenergieanlage anzugeben.

In der prioritätsbegründenden deutschen Anmeldung hat das Deutsche Patent- und Markenamt die folgenden Dokumente recherchiert: DE 10 2005 026 141 A1, DE 10 2016 203 269 A1, DE 10 2018 110 925 A1, US 2014/0003946 A1, US 2014/0010660 A1, US 2015/0086359 A1, US 2018/0230965 A1, US 2019/0072083 A1 und WO 2007/098759 A2.

Die Erfindung löst die zugrundeliegende Aufgabe, indem sie eine Windenergielage mit den Merkmalen von Anspruch 1 vorschlägt. Insbesondere schlägt die Erfindung bei Windenergieanlagen der eingangs bezeichneten Art vor, dass zwischen dem Umfang U_{N} und dem Umfang U_{NB} ein erster radialer Versatz V₁ und/oder zwischen dem Umfang U_{RB} und dem Umfang U_{R} ein zweiter radialer Versatz V₂ ausgebildet ist.

Hierdurch wird der mit dem jeweiligen Lagerring verbundene Flansch aktiv verkrempelt und folgt damit der Bewegung der Lagerung. Da sich beide Komponenten aber erfindungsgemäß in dieselbe Richtung verwinden, reduziert sich das zu übertragende Krempelmoment der Flanschverbindung, wodurch diese entlastet wird.

Dies begünstigt eine Erhöhung der Tragfähigkeit der Flanschverbindung zwischen Rotorblatt und/oder Rotornabe und der Lagerung sowie mit diesen gekoppelten Bauteilen.

Das Krempelmoment ergibt sich aus der Exzentrizität zwischen dem Kraftfluss, welcher durch die Bolzen der jeweiligen Flanschverbindung übertragen wird und der Lage des Schwerpunkts in radialer Richtung des Blattlaminates bzw. des hohlzylindrischen Bereichs der Nabe. Das Krempelmoment stellt die Belastung eines ebenen Systems senkrecht zu seiner Ebene dar und erzeugt als einzige Schnittgröße das Biegemoment, welches sich bei einem rotationssymmetrischen Lager somit in Zug und Druck aufteilt, welche das Lager aus seiner Ebene heraus verformen.

Durch den hohlzylindrischen Bereich wird der Materialeinsatz reduziert. Der Nabenflansch bietet dabei eine tragfähige Verbindung, insbesondere Flanschverbindung, mit dem Blattlager. Durch die abweichenden Umfänge U_{N} und U_{NB} ist die Verschraubung, mittels der Naben-Längsbolzen der ersten Flanschverbindung zwischen Blattlager und Nabe, gut zugänglich und kann ausreichend angespannt werden.

Vorzugsweise ist der erste Lagerring ein äußerer Lagerring und der zweite Lagerring ein in dem äußeren Lagerring angeordneter innerer Lagerring, und der Umfang U_{RB} größer als der Umfang U_{R} ist.

Hierdurch wird insbesondere der Rotorblattflansch aktiv verkrempelt und folgt damit der Bewegung der Lagerung. Da sich beide Komponenten aber erfindungsgemäß in dieselbe Richtung verwinden, reduziert sich das zu übertragende Krempelmoment der Flanschverbindung, wodurch diese entlastet wird.

Vorzugsweise ist der zweite Lagerring ein äußerer Lagerring und der erste Lagerring ein in dem äußeren Lagerring angeordneter innerer Lagerring ist, und der Umfang U_{RB} kleiner als der Umfang U_{R} ist.

Hierdurch wird insbesondere der Nabenflansch aktiv verkrempelt und folgt damit der Bewegung der Lagerung. Da sich beide Komponenten aber erfindungsgemäß in dieselbe Richtung verwinden, reduziert sich das zu übertragende Krempelmoment der Flanschverbindung, wodurch diese entlastet wird.

Weiter bevorzugt weist die Blattlagerung, insbesondere der zweite Lagerring, einen Verlängerungsabschnitt zum Verlängern der Klemmlänge des Rotorblatt-Längsbolzens auf.

Die Erfindung macht sich hierbei die Erkenntnis zu Nutze, dass durch eine rotorblattseitige Verlängerung der Lagerung, vorzugsweise des mit dem Rotorblatt verbundenen Lagerrings, die Steifigkeit des Lagers gegen eine Verkrempelungsverformung erhöht wird. Der Versatz zwischen Rotorblatt-Längsbolzen und Naben- Längsbolzen hat einen erheblichen Einfluss auf die Verkrempelungsverformung des Lagers, kann aus konstruktiven Gründen allerdings nicht reduziert werden. Somit wird erfindungsgemäß zumindest durch eine Versteifung des Lagers einer Verkrempelungsverformung entgegengewirkt und die Traglast des Lagers erhöht.

Der Lagerring und der Verlängerungsabschnitt sind besonders bevorzugt stoffschlüssig verbunden bzw. als integrales Bauteil ausgebildet. Weiter bevorzugt kann alternativ oder ergänzend auch eine form- oder kraftschlüssige Verbindung erfolgen.

Gemäß einer bevorzugten Weiterbildung der Erfindung weist der Verlängerungsabschnitt eine erste rotorblattseitige Kontaktfläche des Verlängerungsabschnitts und eine zweite lagerseitige Kontaktfläche auf, wobei die erste Kontaktfläche des Verlängerungsabschnitts größer oder gleich der zweiten lagerseitigen Kontaktfläche ist.

Die Aussteifung des Lagers gegen eine Verkrempelung sowie die blattseitige Vergrößerung der Auflagefläche ermöglichen eine Reduktion des Materialeinsatzes des Lagers.

Vorzugsweise ist die erste rotorblattseitige Kontaktfläche korrespondierend zu der Kontaktfläche des Rotorblattflansches, und die zweite lagerseitige Kontaktfläche korrespondierend zu der Kontaktfläche des Blattlagers, insbesondere des zweiten Lagerrings, ausgebildet.

Bei der Reduktion des Blattflanschdurchmessers erhöhen sich die Längskräfte deutlich, wodurch sich wiederum die Materialstärke am Blattflansch erhöht. Dies führt dazu, dass die Dicke des Blattflansches die Breite des Lagerrings übersteigt und dieser nicht länger vollständig auf der Oberfläche des Lagers aufliegt. Durch die Aufweitung des Lagers in Richtung des Blattflansches bzw. Verjüngung in Richtung der Lagerung, liegt der Blattflansch auch bei kleinen Lagerdurchmessern vollständig auf. Somit wird der Materialeinsatz reduziert und die Krempelsteifigkeit des Lagers weiter erhöht.

Unter der korrespondierenden Ausbildung von zwei Flächen zueinander wird hier verstanden, dass diese bevorzugt deckungsgleich ausgebildet sind, bzw. zumindest die Projektionsflächen deckungsgleich ausgebildet sind und die Flächen sich gegenseitig abstützen.

Bevorzugt ist die Blattlagerung als eine Wälzlagerung, vorzugsweise eine Rollenlagerung, besonders bevorzugt eine Zylinder-/Pendel/Kegelrollenlagerung. Durch eine Rollenlagerung wird eine Lagerung mit einer hohen Tragfähigkeit in radialer Richtung bereitgestellt.

Gemäß einer alternativen bevorzugten Ausführungsform ist die Wälzlagerung eine oder eine ein- oder mehrreihige Vierpunktlagerung. Durch den Einsatz einer Vierpunktlagerung als Blattlagerung können axiale Lasten in beide Richtungen und Biegemomente aufgenommen werden. Zum Einsatz kommen dabei bevorzugt ein- oder zweireihige Vierpunktlager, und in Abhängigkeit des Antriebskonzepts, insbesondere der Anordnung des Pitchantriebs, mit Innen-, Außen- oder ohne Verzahnung ausgeführt.

Vierpunktlager bezeichnen Wälzlager und insbesondere eine Sonderform des Schrägkugellagers, mit einem Druckwinkel von α ≈ 35°. Es gibt vier Berührpunkte der Wälzkörper mit den Laufbahnen. Durch den geteilten Innenring oder Außenring können mehr Kugeln bei einer geringeren Abmessung verwendet werden. Aus diesem Grund erhöhen sich sowohl die aufnehmbaren axialen als auch radialen Kräfte in beide Richtungen

Die Erfindung wurde vorstehend in einem ersten Aspekt mit Bezug auf eine Windenergieanlage beschrieben, in einem weiteren Aspekt betrifft die Erfindung auch ein Windenergieanlagen-Rotorblatt, mit einem Endabschnitt mit einem Rotorblattflansch zur nabenseitigen Montage an einer Blattlagerung, welcher dazu eingerichtet ist mittels einer Flanschverbindung mit einem inneren Lagerring einer Blattlagerung einer Windenergieanlage verbunden zu werden, und einem Blattlaminat, welches sich in Längsrichtung des Rotorblatts erstreckt und im Bereich eines zweiten Endabschnitts einen Hohlzylinder mit einem mittleren Umfang U_{R} ausbildet, wobei die Flanschverbindung mindestens einen Rotorblatt-Längsbolzen aufweist, welcher auf einem Umfang U_{RB} koaxial zur Blattlagerung angeordnet ist.

Die Erfindung löst die eingangs angegebene Aufgabe bei einer solchen Windenergieanlagen-Rotorblatt dadurch, dass zwischen dem Umfang U_{RB} und/oder dem Umfang U_{R} ein radialer Versatz V₂ ausgebildet ist. Das erfindungsgemäße Windenergieanlagen-Rotorblatt macht sich dieselben Vorteile und bevorzugten Ausführungsformen zunutze die die Windenergieanlage gemäß dem ersten Aspekt, so dass zur Vermeidung von Wiederholungen auf die obigen Ausführungen verwiesen wird.

In einem weiteren Aspekt betrifft die Erfindung auch eine Blattlagerung zum Lagern eines Rotorblatts an einer Nabe einer Windenergieanlage mit einem nabenseitig angeordneten ersten Lagerring, welcher mittels einer ersten Flanschverbindung mit der Rotorblattnabe verbunden ist, einem rotorblattseitig angeordneten zweiten Lagerring, welcher mittels einer zweiten Flanschverbindung mit dem Rotorblattflansch verbunden ist.

Die Erfindung löst die eingangs angegebene Aufgabe bei einer solchen Blattlagerung dadurch, dass die Blattlagerung, insbesondere der zweite Lagerring, einen Verlängerungsabschnitt zum Verlängern der Klemmlänge der zweiten Flanschverbindung, insbesondere eines Rotorblatt-Längsbolzens der zweiten Flanschverbindung, aufweist.

Die erfindungsgemäße Blattlagerung macht sich dieselben Vorteile und bevorzugten Ausführungsformen zunutze die die Windenergieanlage gemäß dem ersten Aspekt, so dass zur Vermeidung von Wiederholungen auf die obigen Ausführungen verwiesen wird.

Die Erfindung wird im Folgenden unter Bezugnahme auf die beigefügten Figuren anhand bevorzugter Ausführungsbeispiele näher beschrieben. Hierbei zeigen:
- Fig. 1:: eine Windenergieanlage schematisch in einer perspektivischen Ansicht,
- Fig.2:: eine Schnittdarstellung eines Ausschnitts der Windenergieanlage gemäß Figur 1,
- Fig.3:: einen Ausschnitt der Windenergieanlage gemäß einer alternativen bevorzugten Ausführungsform, und
- Fig. 4: die Schnittdarstellung gemäß Figur 2 in einer Draufsicht.

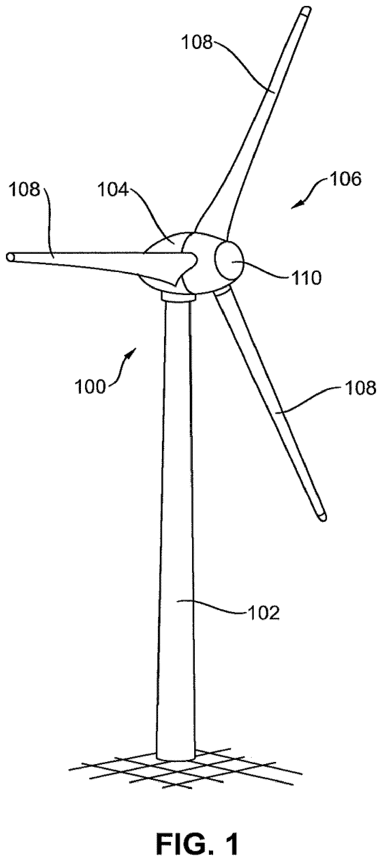

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Die Rotorblätter 108 sind mit ihrem Rotorblattflansch an einer Rotornabe angeordnet. Der Rotor 106 wird im Betrieb durch den Wind in eine Drehbewegung versetzt und treibt dadurch einen (nicht dargestellten) Generator in der Gondel 104 an.

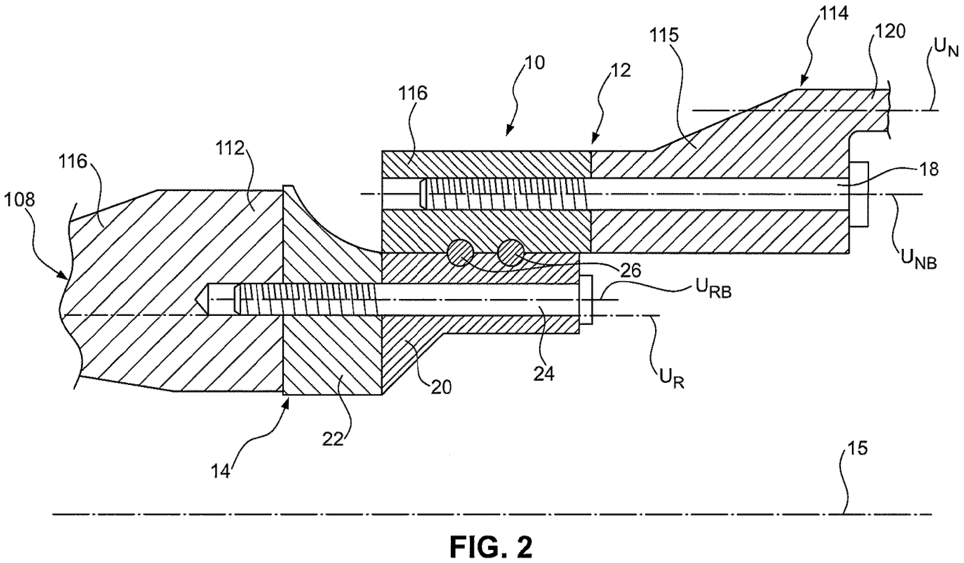

Figur 2 zeigt eine Schnittdarstellung eines Ausschnitts der Windenergieanlage gemäß Figur 1. Das Rotorblatt 108 ist dabei mittels einer Blattlagerung 10 drehbar an der Rotornabe 114 gelagert.

Das Rotorblatt 108 und die Nabe 114 sind koaxial zu dem Lager 10 und symmetrisch um eine Rotationsachse 15 ausgebildet.

Das Rotorblatt 108 umfasst den Rotorblattflansch 112 und ein Blattlaminat 116, welches sich in Längsrichtung des Rotorblatts 108 erstreckt. Das Blattlaminat 116 ist bevorzugt aus einem Faserverbundwerkstoff als Hohlzylinder mit einem mittleren Umfang U_{R} ausgebildet. Der Rotorblattflansch 112 weist dabei einen in Richtung des Blattlagers 10 zunehmenden Durchmesser auf und ist lagerseitig zumindest abschnittsweise als Hohlzylinder mit einem mittleren Umfang U_{RB} ausgebildet.

Die Rotornabe 114 umfasst einen Nabenflansch 115 und einen hohlzylindrisch ausgebildeten Bereich 120 mit einem mittleren Umfang U_{N}.

Die Blattlagerung 10 umfasst einen ersten Lagerring 16, welcher mittels einer ersten Flanschverbindung 12 mit dem Rotornabenflansch 115 verbunden ist, und einen zweiten Lagerring 20, welcher mittels einer zweiten Flanschverbindung 14 mit dem Rotorblattflansch 112 verbunden ist.

Die Blattlagerung 10 ist als Vierpunktlagerung ausgebildet. Der erste Lagerring 16 und der zweite Lagerring 20 sind mittels zwei Reihen von Wälzkörpern 26 drehbar aneinandergelagert. Der zweite Lagerring 20 weist dabei einen geringeren Durchmesser als der erste Lagerring 16 auf und ist drehbar in diesem gelagert.

Wahlweise kann an der Außenseite des ersten Lagerrings 16, bzw. an der Innenseite des zweiten Lagerrings 20 ein Zahnrad ausgebildet sein, welches mit Antrieben zur Nachstellung des Pitchwinkels in Eingriff bringbar ist.

Die erste Flanschverbindung 12, welche durch den ersten Lagerring 16 der Blattlagerung 10 und den Nabenflansch 115 ausgebildet wird, umfasst Rotornaben-Längsbolzen 18 zur kraftschlüssigen Verbindung von Nabenflansch 115 und dem ersten Lagerring 16. Die Rotornaben-Längsbolzen 18 sind entlang eines Umfangs U_{NB} angeordnet. Der Umfang U_{NB} ist dabei kleiner als der mittlere Umfang U_{N} des hohlzylindrisch ausgebildeten Bereichs 120 der Nabe 114.

Die zweite Flanschverbindung 14 wird zwischen dem Rotorblattflansch 112 und einem zweiten Lagerring 20 des Blattlagers 10 ausgebildet. Der Blattflansch 112 ist mit dem Lagerring 20 mittels Rotorblatt-Längsbolzen 24 kraftschlüssig verbunden. Die Rotorblatt-Längsbolzen 24 sind entlang eines Umfangs U_{RB} angeordnet. Der Umfang U_{RB} ist dabei größer als der mittlere Umfang U_{R} in dem hohlzylindrisch ausgebildeten Bereich des Blattlaminats. Der zweite Lagerring 20 umfasst einen Verlängerungsabschnitt 22 an seinem blattseitigen Ende. Der Verlängerungsabschnitt 22 weist eine sich blattseitig vergrößernde Kontaktfläche auf. Durch die vergrößerte Kontaktfläche liegt der Rotorblattflansch 112 vollflächig auf dem Verlängerungsabschnitt 22 des Lagerings 20 auf.

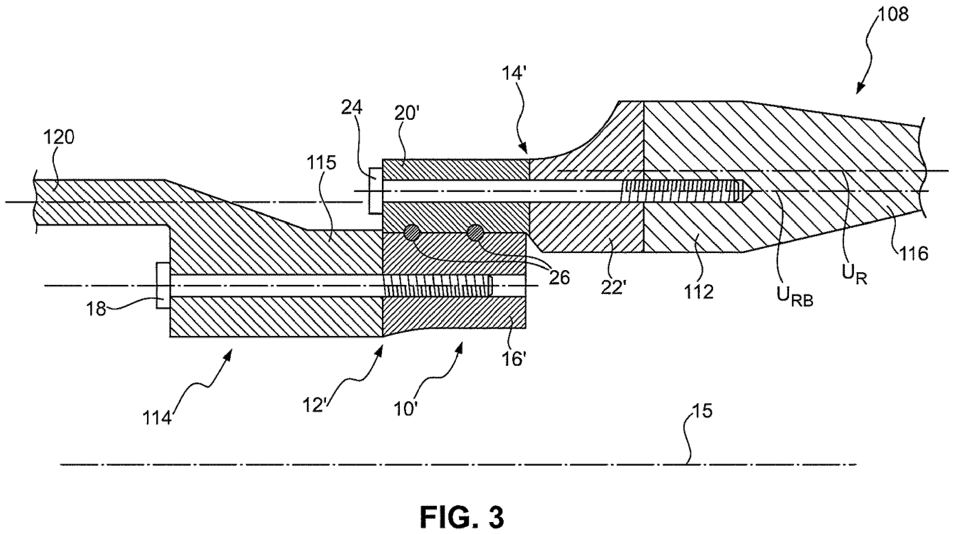

Figur 3 zeigt einen Ausschnitt der Windenergieanlage gemäß einer alternativen bevorzugten Ausführungsform.

Das Rotorblatt 108 ist dabei mittels einer Blattlagerung 10' drehbar an der Rotornabe 114 gelagert. Das Rotorblatt 108 und die Nabe 114 sind entsprechend dem in Figur 2 gezeigten Ausführungsbeispiels ausgebildet.

Die Blattlagerung 10' umfasst einen ersten Lagerring 16', welcher mittels einer ersten Flanschverbindung 12' mit dem Rotornabenflansch 115 verbunden ist, und einen zweiten Lagerring 20', welcher mittels einer zweiten Flanschverbindung 14' mit dem Rotorblattflansch 112 verbunden ist.

Der erste Lagerring 16' ist dabei in dem zweiten, äußeren Lagerring 20' angeordnet, sodass die Rotornabe 114 in dem Rotorblatt 108 drehbar mittels der Blattlagerung 10'gelagert ist.

Der Rotornabenflansch 115 ist mittels der Rotornaben-Längsbolzen 18 mit dem inneren Lagerring 16' der Blattlagerung 10' verbunden und bildet eine erste Flanschverbindung 12'.

Die zweite Flanschverbindung 14' wird von dem äußeren zweiten Lagerring 20' und dem Rotorblattflansch 112 ausgebildet, welche mittels der Rotorblatt-Längsbolzen 24 verbunden ist. Die Rotorblatt-Längsbolzen 24 sind entlang eines Umfangs U_{RB} angerordnet. Der Umfang U_{RB} ist dabei kleiner als der Umfang U_{R}, welcher den mittleren Umfang des Das Blattlaminats 116 ausbildet.

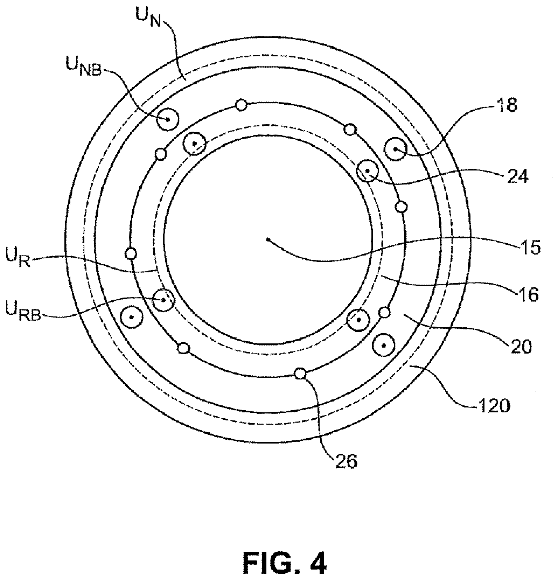

Figur 4 zeigt den Ausschnitt der Schnittdarstellung der Windenergieanlage gemäß Figur 2 in einer Draufsicht. Das Rotorblatt 108 umfasst den Rotorblattflansch 112 und das Rotorblattlaminat 116 mit dem mitterlen Umfang U_{R}. Das Rotorblatt 108 ist mittels der Blattlagerung 10 drehbar an der Rotornabe 114 gelagert. Die Rotornabe 114 umfasst den Rotornabenflansch 115 und den hohlzylindrisch ausgebildeten Bereich 120 mit dem mittleren Umfang U_{N}.

Wie insbesondere Figur 4 zeigt, sind bei der Ausführungsform gemäß Figur 2 die Rotornaben-Längsbolzen 18 der ersten Flanschverbindung 12 auf einem Umfang U_{NB} angeordnet, welcher kleiner als der mittlere Umfang U_{N} des hohlzylindrisch ausgebildeten Bereichs 120 der Rotornabe 114.

Der Rotornabenflansch 115 ist mittels der Rotornaben-Längsbolzen 18 mit dem äußeren Lagerring 16 der Blattlagerung 10 verbunden. In dem äußeren Lagerring 16 ist mittels einer Vielzahl von Wälzkörpern 26 ein innerer Lagerring 20 drehbar gelagert.

Die zweite Flanschverbindung 14 wird von dem inneren Lagerring 20 und dem Rotorblattflansch 112 ausgebildet, welche mittels der Rotorblatt-Längsbolzen 24 verbunden ist. Die Rotorblatt-Längsbolzen 24 sind entlang eines Umfangs U_{RB} angerordnet. Der Umfang U_{RB} ist dabei größer als der Umfang U_{R}, welcher den mittleren Umfang des Das Blattlaminats 116 ausbildet.

## Patentansprüche

1. Windenergieanlage, umfassend:
- eine Nabe (114) mit einem hohlzylindrischen Bereich (120) mit einem mittleren Umfang U_{N},
- mindestens ein drehbar an der Nabe (114) gelagertes Rotorblatt (108) mit einem Blattlaminat (116), welches sich in Längsrichtung des Rotorblatts (108) erstreckt und zumindest abschnittsweise einen Hohlzylinder mit einem mittleren Umfang U_{R} ausbildet, und
- mindestens eine Blattlagerung (10, 10') zum Lagern des Rotorblatts (108) an der Nabe (114) mit
einem nabenseitig angeordneten ersten Lagerring (16, 16'), welcher mittels einer ersten Flanschverbindung (12, 12') mit einem Rotornabenflansch (115), welcher an einem rotorblattseitigen Endabschnitt der Nabe (114) ausgebildet ist, verbunden ist, wobei die erste Flanschverbindung (12, 12') mindestens einen Naben-Längsbolzen (18) aufweist, welcher auf einem Umfang U_{NB} koaxial zur Blattlagerung (10, 10') angeordnet ist,
einem rotorblattseitig angeordneten zweiten Lagerring (20, 20'), welcher mittels einer zweiten Flanschverbindung (14, 14') mit einem Rotorblattflansch (112), welcher an einem nabenseitigen Endabschnitt des Rotorblattes (108) ausgebildet ist, verbunden ist, wobei die zweite Flanschverbindung (14, 14') mindestens einen Rotorblatt-Längsbolzen (24) aufweist, welcher auf einem Umfang U_{RB} koaxial zur Blattlagerung (10, 10') angeordnet ist,
**dadurch gekennzeichnet, dass** zwischen dem Umfang U_{N} und dem Umfang U_{NB} ein erster radialer Versatz V₁ und/oder zwischen dem Umfang U_{RB} und dem Umfang U_{R} ein zweiter radialer Versatz V₂ ausgebildet ist.

2. Windenergieanlage nach Anspruch 1,
wobei der erste Lagerring ein äußerer Lagerring (16) und der zweite Lagerring ein in dem äußeren Lagerring (16) angeordneter innerer Lagerring (20) ist, und der Umfang U_{RB} größer als der Umfang U_{R} ist.

3. Windenergieanlage nach Anspruch 1,
wobei der zweite Lagerring ein äußerer Lagerring (20') und der erste Lagerring ein in dem äußeren Lagerring (20') angeordneter innerer Lagerring (16') ist, und Umfang U_{RB} kleiner als der Umfang U_{R} ist.

4. Windenergieanlage nach einem der vorstehenden Ansprüche,
wobei die Blattlagerung (10, 10'), insbesondere der zweite Lagerring (20, 20'), einen Verlängerungsabschnitt (22, 22') zum Verlängern der Klemmlänge des Rotorblatt-Längsbolzens (24) aufweist.

5. Windenergieanlage nach Anspruch 4,
wobei der Verlängerungsabschnitt (22) eine erste rotorblattseitige Kontaktfläche und eine zweite lagerseitige Kontaktfläche aufweist,
wobei die erste Kontaktfläche größer oder gleich der zweiten lagerseitigen Kontaktfläche ist.

6. Windenergieanlage nach Anspruch 5,
wobei die erste rotorblattseitige Kontaktfläche des Verlängerungsabschnitts (22) korrespondierend zu der Kontaktfläche des Rotorblattflansches (112), und
die zweite lagerseitige Kontaktfläche des Verlängerungsabschnitts korrespondierend zu der Kontaktfläche des zweiten Lagerrings(20, 20') des Blattlagers ausgebildet ist.

7. Windenergieanlage nach einem der vorstehenden Ansprüche,
wobei Blattlagerung (10, 10') eine Wälzlagerung, vorzugsweise eine Rollenlagerung, besonders bevorzugt eine Zylinder-/Pendel/Kegelrollenlagerung ist.

8. Windenergieanlagen-Rotorblatt (108), mit
- einem Endabschnitt mit einem Rotorblattflansch 112 zur nabenseitigen Montage an einer Blattlagerung (10, 10'), welcher dazu eingerichtet ist mittels einer Flanschverbindung (14, 14') mit einem Lagerring (20, 20') einer Blattlagerung (10, 10') einer Windenergieanlage verbunden zu werden, und
- einem Blattlaminat (116), welches sich in Längsrichtung des Rotorblatts (108) erstreckt und im Bereich eines zweiten Endabschnitts einen Hohlzylinder mit einem mittleren Umfang U_{R} ausbildet,
wobei die Flanschverbindung (14, 14') mindestens einen Rotorblatt-Längsbolzen (24) aufweist, welcher auf einem Umfang U_{RB} koaxial zur Blattlagerung (10, 10') angeordnet ist, **dadurch gekennzeichnet, dass** zwischen dem Umfang U_{RB} und/oder dem Umfang U_{R} ein radialer Versatz V₂ ausgebildet ist.

9. Rotorblattlagerung (10, 10') zum Lagern eines Rotorblatts an einer Nabe mit
- einem nabenseitig angeordneten ersten Lagerring (16, 16'), welcher mittels einer ersten Flanschverbindung (12, 12') mit der Rotorblattnabe verbunden ist,
- einem rotorblattseitig angeordneten zweiten Lagerring (20, 20'), welcher mittels einer zweiten Flanschverbindung (14, 14') mit dem Rotorblattflansch (112) verbunden ist, **dadurch gekennzeichnet, dass** die Blattlagerung (10, 10'), insbesondere der zweite Lagerring (20, 20'), einen Verlängerungsabschnitt (22, 22') zum Verlängern der Klemmlänge der zweiten Flanschverbindung (14, 14'), insbesondere eines Rotorblatt-Längsbolzens (24) der zweiten Flanschverbindung (14, 14'), aufweist.

10. Rotorblattlagerung (10, 10') nach Anspruch 9,
wobei der Verlängerungsabschnitt (22) eine erste rotorblattseitige Kontaktfläche und eine zweite Kontaktfläche aufweist, wobei die erste Kontaktfläche größer oder gleich der zweite Kontaktfläche ist.

11. Rotorblattlagerung (10, 10') nach Anspruch 9 oder 10,
wobei die erste rotorblattseitige Kontaktfläche korrespondierend zu der Kontaktfläche des Rotorblattflansches (112), und
die zweite Kontaktfläche korrespondierend zu der Kontaktfläche des Blattlagers (10, 10'), insbesondere des zweiten Lagerrings (20, 20'), ausgebildet ist.
